# EUROPEAN PATENT APPLICATION

(11) **EP 2 092 828 A2**
(43) Date of publication of application: **26.08.2009**
(21) Application number: 08154695.4
(22) Date of filing: 17.04.2008
(51) Int. Cl.: A21C 9/06

(54) **Machine and process for making stuffed pasta**

(30) Priority: 25.02.2008 IT MI20080297
(71) Applicant: Dominioni Punto & Pasta S.A.S., 22075 Lurate Caccivio (CO) (IT)
(72) Inventor: DOMINIONI, Pietro, 22075, Lurate Caccivio (Como) (IT)
(74) Representative: Pesce, Michele

(57) **Abstract**

The machine (1) for making stuffed pasta comprises a first roller (15) defining first dies (23) and a second roller (16) defining second dies (24). The first and second dies (23, 24) are arranged to cooperate to form the stuffed pasta. The machine also comprises a feeder (21) for feeding stuffing between pairs of first and second dies (23, 24). The first and/or second dies (23, 24) present passages (27, 28) connectable to a suction source to draw the first pasta sheet (4) into said first and/or second die (23, 24) and generate in the first and/or second pasta sheet (4, 5) a seat into which to insert the stuffing. The first dies (23) present edges provided with a cutter (45), such that when said stuffed pasta is formed, it is also cut and separated from the first and second pasta sheet (4, 5). The present invention also relates to the pasta making process implemented by said machine.

## Description

The present invention relates to a machine and process for making stuffed pasta.

Stuffed pasta is known to consist of two superposed pasta sheets between which a stuffing of meat, ham, cheese, etc. is inserted.

The industrial production of this pasta is mechanized, using machines enabling both quality production and high productivity to be obtained.

Traditional machines present a pair of moulds usually in the form of opposing rollers, between which the pasta sheets are passed.

The rollers present a plurality of dies into which the pasta sheets are inserted with the stuffing interposed; the moulds are closed to fix the pasta sheets, and trap the stuffing to form the stuffed pasta.

These machines and production process enable very satisfactory results to be obtained for small-dimension stuffed pasta.

However, the current market tendency is to require pasta of increasingly greater dimensions, with the result that the stuffings are increasingly more voluminous and hence use large quantities of product.

It has been found that using traditional machines to make this (giant) stuffed pasta achieves very poor quality results, because the pasta tends to open and/or to break during cooking.

To overcome these drawbacks, machines have been developed composed of numerous rollers which treat the pasta under formation in succession; these machines are able to prepare products (i.e. stuffed pasta) of good quality, i.e. which holds the cooking and can be cooked without opening or breaking.

However these traditional machines are very costly to purchase and operate, their adjustment requiring considerable time as it has to be done carefully with precision.

The technical aim of the present invention is therefore to provide a machine and process for making stuffed pasta by which the stated technical drawbacks of the known art are eliminated.

Within the scope of this technical aim, an object of the invention is to provide a machine and process which enable stuffed pasta with excellent qualitative characteristics to be made.

A further object of the present invention is to provide a machine which is economical in terms both of purchasing and operating cost.

A further object of the present invention is to provide a machine which does not require lengthy complex adjustment for its operation.

The technical aim together with these and other objects are attained according to the present invention by a machine and process for making stuffed pasta in accordance with the accompanying claims.

Further characteristics and advantages of the invention will be more apparent from the description of a preferred but non-exclusive embodiment of the machine and process of the invention, the machine being illustrated by way of non-limiting example in the accompanying drawings, in which:

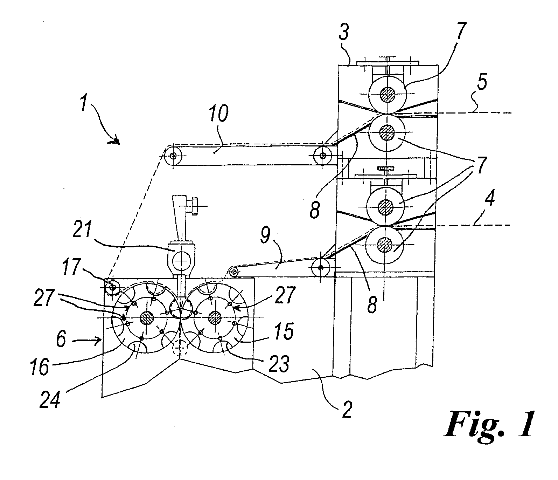

Figure 1 is a schematic side view elevation of a machine according to the invention;
Figures 2 and 3 are a side view of a portion of the machine of Figure 1 in two different operative stages;

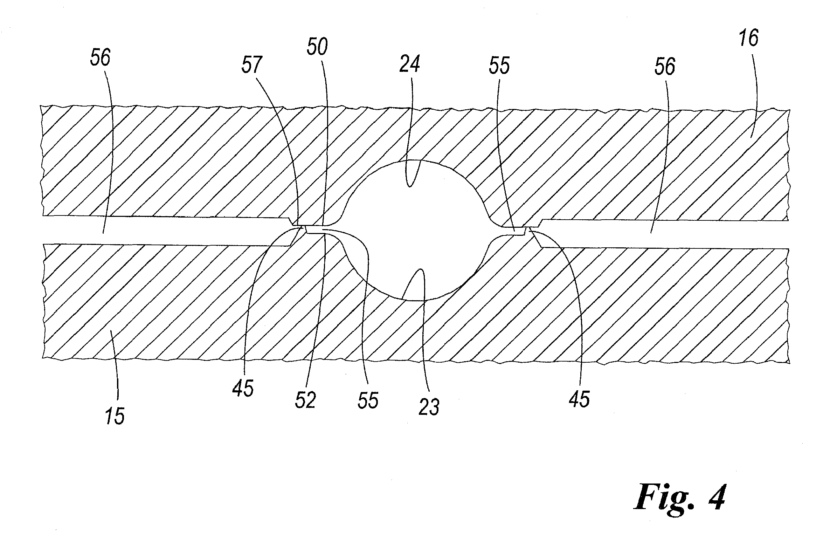

Figure 4 is an enlarged partial section through the rollers defining the first and second moulds;

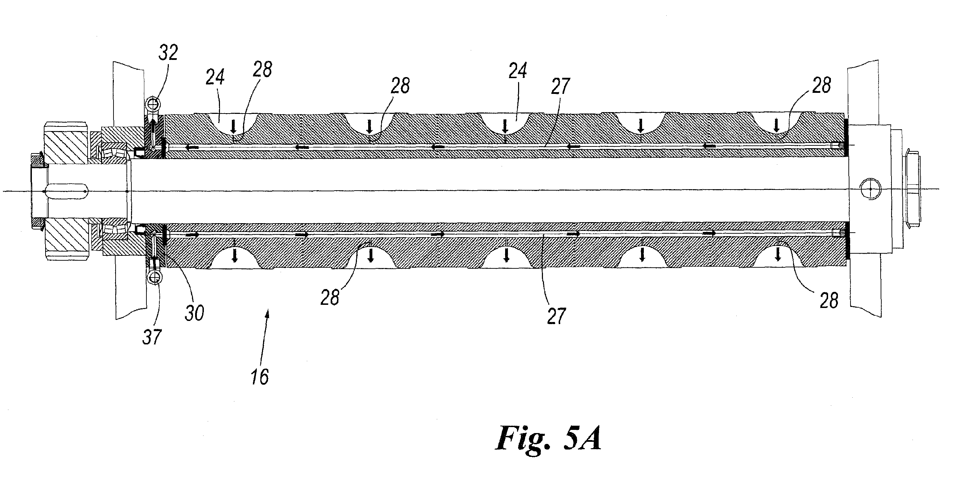

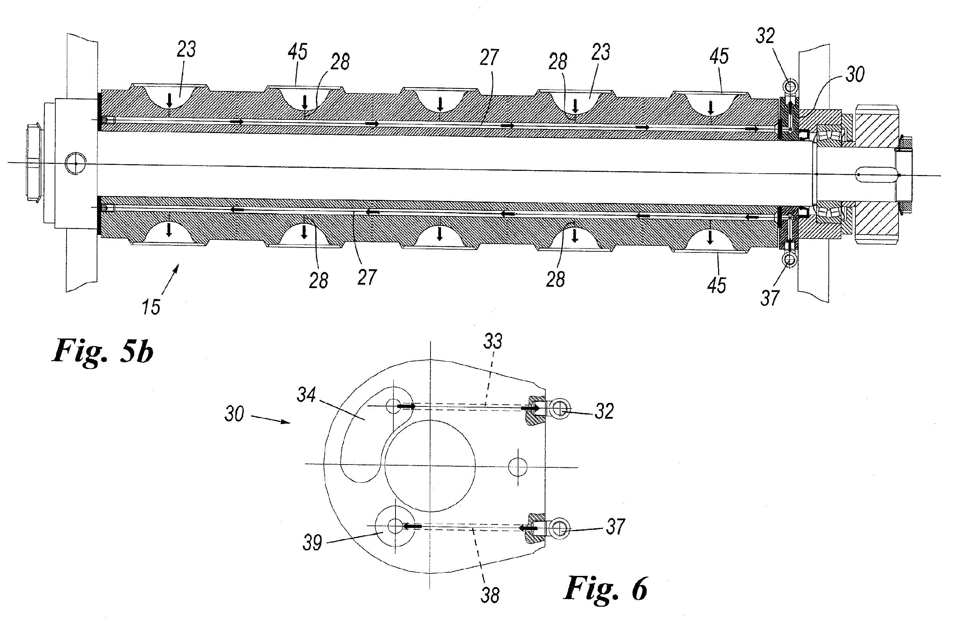

Figures 5a and 5b each show an enlarged longitudinal section through a roller with dies not provided with a cutter, and through a roller with dies provided with a cutter respectively; and
Figure 6 is a partially sectional view of a plate provided with a slot and a hole for respectively drawing in and blowing air through suitable conduits of the rollers, this plate being identical for the rollers shown in Figures 5a and 5b.

With reference to said figures, these show a machine for making stuffed pasta, indicated overall by the reference number 1.

The machine 1 comprises a frame 2 supporting a column 3 for feeding two pasta sheets 4, 5 to a forming unit 6 for the stuffed pasta.

The column 3 presents two pairs of rollers 7 and two chutes 8 to supply the pasta sheets 4, 5 to conveyor belts 9, 10 feeding a first and second roller 15, 16.

The first and second roller 15, 16 rotate with continuous movement (mutually synchronized, driven by a drive, not shown). In an alternative embodiment of the machine the rollers 15 and 16 can move with discontinuous synchronized movement.

As shown in the figures, the conveyor belt 9 directly feeds the roller 15, while the conveyor belt 10 feeds the roller 16 via a guide roller 17 for the pasta sheet.

The first and seconds rollers 15, 16 are arranged to support the pasta sheets 4 and 5 respectively, and to process them to form the stuffed pasta. The first roller 15 defines first dies 23 disposed along its periphery, the second roller 16 defining second dies 24 positioned along its periphery in a number equal to the number of the first dies 23; the first and second dies 23, 24 mutually cooperate to form the stuffed pasta.

The machine 1 also comprises a feeder 21 for feeding stuffing between pairs of first and second dies 23, 24 (and hence between the first and second pasta sheet 4, 5 when these are supported by the rollers 15, 16); the stuffing is suitably fed before the closure of the first and second die 23, 24 to form the stuffed pasta.

This stuffing feeder 21 is of traditional type.

The first dies 23 present air passages connectable to a suction source such as to draw the first pasta sheet 4 into the first dies 23 and generate in the first pasta sheet 4 seats into which to insert the stuffing.

In the machine embodiment shown in the figures, the second dies 24 also present air passages connectable to the suction source, to draw the second pasta sheet 5 into the second dies 24 and also generate seats in the second pasta sheet 5 into which to insert the stuffing.

In further embodiments, the passages could be provided only in the first or second dies 23, 24.

Advantageously, the first dies 23 present edges provided with a cutter 45, such that when the stuffed pasta is formed, it is also cut and separated from the first and second pasta sheet 4, 5.

Other machine configurations are also possible, for example only the first roller 15 (or the second roller 16) could be provided with dies or the rollers 23 and 24 could be inverted.

The air passages in the first and second dies 23, 24 comprise a conduit 27 connectable to the suction source and connected to one or more channels 28 which open into each of the dies 23, 24.

The machine 1 comprises a connection piece 30 slidably connected to the first and second roller 15, 16.

This connection piece 30 consists of a plate provided with a connector 32 connected to a suction source (not shown), the connector 32 being connected via a channel 33 to a slot 34.

During their rotation, the rollers 15 and 16 carry their conduits 27 to the slot 34, and when this happens a vacuum is generated in the dies 23, 24 to draw the pasta sheet into them so that it adhere to said dies.

This structure is very simple and enables the process (i.e. vacuum generation) to take place simultaneously in more than one die, even forming part of different rows, in a very simple manner.

In particular, in the present machine the slot 34 is of sufficient length to enable the process (i.e. vacuum generation) to take place simultaneously in two rows of dies; hence two conduits 27 can open at the slots 34 of each plate 30.

In practice, the connector 32 is permanently connected to the suction source, while the slot 34 is connectable to each of the conduits 27 (in the present case in pairs) in succession during rotation of the rollers 15, 16.

The machine 1 also suitably comprises blowing means able to detach the stuffed pasta formed by the moulds 15, 16.

These blowing means comprise in the plate 30 a second connector 37 connected to the compressed air delivery (of a compressor).

The connector 37 is also connected via a conduit 38 to an aperture or hole 39 facing the rollers 15, 16.

During their rotation the rollers 15, 16 carry their conduits 27 to the hole 39, and when this happens air is blown into the dies 23, 24 to facilitate pasta expulsion.

The slot 34 and hole 39 enable the commencement/end of suction to be regulated.

As shown in the described embodiment, the plates 30 of the roller 15 and 16 are positioned on opposite sides of the rollers, however it is clear that they could be positioned on the same side.

Hence in practice, the passages of the first and/or second die 23, 24 extend as far as a lateral end of the first and/or second roller 15, 16.

This lateral end is slidably connected to the plate 30 provided with the slot 34 connected to the suction source and to the hole 39 connected to the compressor.

In this manner, during rotation of the first and/or second roller 15, 16 the first and/or second die 23, 24 are connected to the suction source or compressor in turn.

The second dies 24 present flat edges 50, while the first dies 23 present flat edges 52 with the cutter 45 projecting towards the flat edge 50 of the corresponding second die 24.

The first dies 23 present edges 52 which are raised relative to the first roller 15, the second dies 24 also presenting edges 50 raised relative to the second roller 16.

When the first and second die are at least partially associated, those facing edges 52, 50 of the first and second dies 23, 24 which are positioned internal to the dies relative to the cutters 45 define a first interspace 55.

This first interspace 55 has a thickness less than the sum of the thicknesses of the first pasta sheet 4 and of the second pasta sheet 5, the thickness of the first interspace 55 preferably being less than the sum of the thicknesses of the first and second pasta sheet 4, 5 by a value between 0.02-0.04 millimetres; this enables the edges of the first and second sheet 4, 5 to correctly adhere together, to form the stuffed pasta.

In contrast, those facing surfaces of the first and second roller 15, 16 external to the dies 23, 24 define a second interspace 56.

This second interspace 56 has a thickness greater than the sum of the thicknesses of the first pasta sheet 4 and of the second pasta sheet 5; this prevents the first and second pasta sheet 4, 5 from adhering, during processing, in those regions not intended to form the stuffed pasta.

Advantageously, the cutter 45 cooperates with a perimetral region 57 of the edge 50 of the second die 24.

As shown in the accompanying figures, in a preferred embodiment of the machine the first roller 15 and the second roller 16 are both provided with the seats 23, 24 and air passages.

The operation of the machine for making stuffed pasta of the invention is evident from that described and illustrated and is substantially as follows.

The first pasta sheet 4 passes through one of the pairs of rollers 7, then passes along one of the chutes 8 to pass onto the conveyor belt 9, by which it is deposited onto the roller 15.

In the same manner the second pasta sheet 5 passes through the other pair of rollers 7, along the other chute 8 and onto the conveyor belt 10; from this the second pasta sheet passes about the guide roller 17 and is deposited on the roller 16.

At this point the pasta sheets move together with the rollers 15, 16.

In a preferred embodiment of the machine the rollers 15, 16 move with continuous synchronous movement at possibly adjustable predetermined speed.

When the pasta sheets are ready to receive the stuffing, the dispenser 21 discharges the stuffing between the pasta sheets as indicated by the arrow F.

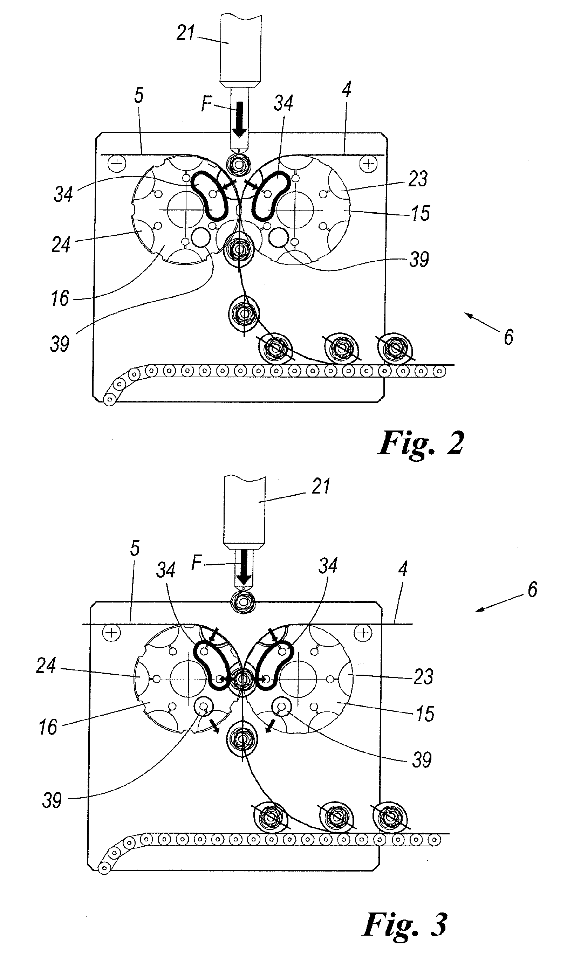

When in a predetermined position (shown in Figure 2), the conduits 27 of a pair of dies 23, 24 are brought into communication with the slots 34; hence the suction source draws each of the pasta sheets 4, 5 into the dies 23, 24 and deforms them, to form the seat into which to insert the stuffing.

After the stuffing has been inserted, the rollers 15 and 16 rotate, causing closure and simultaneous cutting of the pasta sheets, to form the stuffed pasta such as a giant ravioli piece, and at the same time to separate the formed stuffed pasta from the pasta sheets; other dies 23, 24 simultaneously face the stuffing dispenser 21.

During rotation, after the stuffed pasta has been formed and cut, the rollers 15, 16 bring the conduits 27 into positions corresponding with the holes 39 in the plates 30.

This causes compressed air to pass through the holes 39, through the conduits 27 and then into the dies.

This facilitates expulsion of the formed stuffed pasta, preventing it from remaining adhering to the interior of the dies 23, 24.

The present invention also relates to a process for making stuffed pasta.

The process comprises the steps of disposing a first and a second pasta sheet 4, 5 on a first and second die 23, 24 respectively, drawing at least the first pasta sheet 4 into the first die 23 to form a seat, feeding stuffing between said first and second pasta sheet 4, 5 and bringing the first and second die 23, 24 together to form the stuffed pasta.

Simultaneously with the formation of the stuffed pasta, said stuffed pasta is cut and separated from the first and second pasta sheet 4, 5.

Air is suitably blown into the first and second die 23, 24 after forming the stuffed pasta, to facilitate expulsion of the stuffed pasta.

In different embodiments, the machine presents several pairs of first and second rollers 15, 15 which operate in parallel.

It has been found in practice that the machine and process for making stuffed pasta according to the invention are particularly advantageous as they enable pasta of excellent quality to be obtained, the machine being economical and not requiring adjustment.

In practice the materials used and the dimensions can be chosen at will according to requirements and to the state of the art.

## Claims

1. A machine (1) for making stuffed pasta, comprising: a first roller (15) defining first dies (23) and a second roller (16) defining second dies (24), the first and second dies (23, 24) being arranged to cooperate to form the stuffed pasta, and a feeder (21) for feeding stuffing between pairs of first and second dies (23, 24), said first and/or second dies (23, 24) presenting passages (27, 28) connectable to a suction source to draw the first and/or second pasta sheet (4, 5) into said first and/or second die (23, 24) and generate in the first and/or second pasta sheet (4, 5) a seat into which to insert the stuffing, **characterised in that** said first dies (23) present edges provided with a cutter (45), such that when said stuffed pasta is formed, it is also cut and separated from the first and second pasta sheet (4, 5).

2. A machine (1) as claimed in claim 1, **characterised in that** said second dies (24) present flat edges (50), said first dies (23) presenting flat edges (52) with said cutter (45), which projects towards a flat edge (50) of the corresponding second die (24).

3. A machine as claimed in one or more of the preceding claims, **characterised in that** said first dies (23) present their edges (52) raised relative to said first roller (15), said second dies (24) presenting their edges (50) raised relative to said second roller (16).

4. A machine as claimed in one or more of the preceding claims, **characterised in that** those facing edges (52, 50) of the first and second dies (23, 24) which are positioned internal to the dies (23, 24) relative to the cutters (45) define a first interspace (55).

5. A machine as claimed in one or more of the preceding claims, **characterised in that** the first interspace (55) has a thickness less than the sum of the thicknesses of the first pasta sheet (4) and the second pasta sheet (5).

6. A machine as claimed in one or more of the preceding claims, **characterised in that** the thickness of the first interspace (55) is less than the sum of the thicknesses of the first and second pasta sheet (4, 5) by a value between 0.02-0.04 millimetres.

7. A machine as claimed in one or more of the preceding claims, **characterised in that** those facing surfaces of the first and second roller (15, 16) external to the first and second die (23, 24) define a second interspace (56), said second interspace (56) having a thickness greater than the sum of the thicknesses of the first pasta sheet (4) and of the second pasta sheet (5).

8. A machine as claimed in one or more of the preceding claims, **characterised in that** said cutter (45) cooperates with a perimetral region (57) of the edge (50) of said second die (24).

9. A machine as claimed in one or more of the preceding claims, **characterised in that** the air passages (27, 28) of each first and/or second die (23, 24) are connectable to the suction source in succession.

10. A machine as claimed in one or more of the preceding claims, **characterised in that** said first and second roller (15, 16) move with continuous movement.

11. A machine as claimed in one or more of the preceding claims, **characterised by** comprising blowing means able to detach the stuffed pasta formed by said first and/or second die (23, 24).

12. A machine as claimed in one or more of the preceding claims, **characterised in that** said blowing means comprise a compressor connectable to said passages (27, 28) of said first and second roller (15, 1) in succession.

13. A machine as claimed in one or more of the preceding claims, **characterised in that** said passages (27, 28) of said first and/or second die (23, 24) extend as far as a lateral end of said first and/or second rollers (15, 16), said lateral end of said first and/or second rollers being slidably connected to a plate (30) provided with a slot (34) connected to said suction source and to a hole (39) connected to said compressor, such that during rotation of the first and/or second roller (15, 16) the first and/or second die (23, 24) are connected to said suction source or to said compressor in turn.

14. A process for making stuffed pasta, comprising the steps of disposing a first and a second pasta sheet (4, 5) on a first and second die (23, 24) respectively, drawing the first and/or second pasta sheet (4, 5) into the first and/or second die (23, 24) to form a seat, feeding stuffing between said first and second pasta sheet (4, 5) and bringing the first and second die (23, 24) together to form the stuffed pasta, **characterised by** cutting the stuffed pasta and separating it from the sheet while the stuffed pasta is being formed.

15. A process as claimed in the preceding claims, **characterised by** blowing into said first and second die (23, 24) after forming said stuffed pasta, to facilitate expulsion of said stuffed pasta.
